(19) Europäisches Patentamt / European Patent Office / Office européen des brevets

(11) **EP 4 122 596 A1**

(12) **DEMANDE DE BREVET EUROPEEN**

(43) Date de publication:
**25.01.2023** Bulletin 2023/04

(21) Numéro de dépôt: **22184511.8**

(22) Date de dépôt: **12.07.2022**

(51) Classification Internationale des Brevets (IPC):
**B01J 21/04** (2006.01)    **B01J 23/882** (2006.01)
**B01J 35/00** (2006.01)    **B01J 35/08** (2006.01)
**B01J 35/10** (2006.01)    **B01J 37/00** (2006.01)
**B01J 37/02** (2006.01)    **B01J 37/08** (2006.01)
**B01J 37/16** (2006.01)    **B01J 37/20** (2006.01)
**B01J 37/28** (2006.01)    **C10G 2/00** (2006.01)

(52) Classification Coopérative des Brevets (CPC):
**B01J 21/04; B01J 23/882; B01J 35/002;
B01J 35/006; B01J 35/008; B01J 35/08;
B01J 35/1019; B01J 35/1042; B01J 37/0018;
B01J 37/0201; B01J 37/0205; B01J 37/0207;
B01J 37/0213; B01J 37/088; B01J 37/16;** (Cont.)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **22.07.2021 FR 2107959**

(71) Demandeur: **IFP Energies nouvelles
92500 Rueil-Malmaison (FR)**

(72) Inventeurs:
• **FECANT, Antoine
92852 RUEIL-MALMAISON CEDEX (FR)**
• **BLONS, Charlie
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(54) **CATALYSEUR D HYDRODÉSULFURATION AVEC RÉPARTITION EN CROÛTE DE LA PHASE ACTIVE**

(57) Catalyseur comprenant une phase active contenant un élément du groupe VIB, un élément du groupe VIII et du phosphore, et un support contenant de l'alumine, ledit catalyseur étant caractérisé en ce qu'au moins 80 % en poids des éléments du groupe VIB, du groupe VIII et du phosphore soient répartis sur une croûte en périphérie dudit support, l'épaisseur de ladite croûte étant comprise entre 100 et 1200 $\mu$m, la teneur en élément du groupe VIB étant comprise entre 1 et 8% en poids par rapport au poids total du catalyseur, la teneur en élément du groupe VIII étant comprise entre 0,5 et 5% poids par rapport au poids total du catalyseur, et la teneur en phosphore étant comprise entre 0,2 et 3% poids par rapport au poids total du catalyseur, ledit support comprenant une surface spécifique comprise entre 100 m²/g et 250 m²/g.

EP 4 122 596 A1

(52) Classification Coopérative des Brevets (CPC):
(Cont.)
**B01J 37/20; B01J 37/28; C10G 45/08;**
C10G 2300/1044; C10G 2400/02

**Description**

**Domaine de l'invention**

La présente invention se rapport au domaine de l'hydrotraitement des coupes essences, notamment des coupes essences issues des unités de craquage catalytique en lit fluidisé. Plus particulièrement, la présente invention concerne un catalyseur et sa mise en œuvre dans un procédé d'hydrodésulfuration d'une coupe essence oléfinique contenant du soufre, telles que les essences issues du craquage catalytique, pour lesquelles on cherche à diminuer la teneur en composés soufrés, sans hydrogéner les oléfines et les aromatiques.

**Etat de la technique**

Le raffinage pétrolier ainsi que la pétrochimie sont maintenant soumis à de nouvelles contraintes. En effet, tous les pays adoptent progressivement des spécifications sévères en soufre, l'objectif étant d'atteindre par exemple 10 ppm (poids) de soufre dans les essences commerciales en Europe et au Japon. Le problème de réduction des teneurs en soufre se concentre essentiellement sur les essences obtenues par craquage, qu'il soit catalytique (FCC Fluid Catalytic Cracking selon la terminologie anglo-saxonne) ou non catalytique (cokéfaction, viscoréduction, vapocraquage), principaux précurseurs de soufre dans les pools essence.

Une solution, bien connue de l'homme du métier, pour réduire la teneur en soufre consiste à effectuer un hydrotraitement (ou hydrodésulfuration) des coupes hydrocarbonées (et notamment des essences de craquage catalytique) en présence d'hydrogène et d'un catalyseur hétérogène. Cependant ce procédé présente l'inconvénient majeur d'entrainer une chute très importante de l'indice d'octane si le catalyseur mis en œuvre n'est pas assez sélectif. Cette diminution de l'indice d'octane est notamment liée à l'hydrogénation des oléfines présentes dans ce type d'essence de manière concomitante à l'hydrodésulfuration. Contrairement à d'autres procédés d'hydrotraitement, l'hydrodésulfuration des essences doit donc permettre de répondre à une double contrainte antagoniste : assurer une hydrodésulfuration profonde des essences et limiter l'hydrogénation des composés insaturés présents.

Une voie pour répondre à cette double problématique consiste à employer des catalyseurs d'hydrodésulfuration à la fois actifs en hydrodésulfuration mais également très sélectifs en hydrodésulfuration par rapport à la réaction d'hydrogénation des oléfines.

En lien avec cela, B. Liu et al. (Fuel, Volume: 25, 2012, Pages 457-463, JOURNAL OF NATURAL GAS CHEMISTRY, Volume: 21 Issue: 2, March 2012 Pages: 194-199) ont mis en évidence l'amélioration des performances en hydrodésulfuration d'essence issu d'une étape de craquage catalytique de catalyseurs CoMoS sur alumine gamma lorsque la phase CoMoS est répartie en croûte au sein du catalyseur.

Par ailleurs, le document CN104275191 divulgue un catalyseur d'hydrogénation sélective d'une essence de FCC comprenant du nickel et du molybdène déposés sur un support en alumine, le nickel et le molybdène étant répartis sous la forme d'une croûte en périphérie du support.

Le document US 2018/0193823 divulgue un procédé d'hydropyrolyse mettant en œuvre un catalyseur à base de nickel, cobalt et molybdène étant répartis sous la forme d'une croûte en périphérie du support.

Enfin, le document US 2011/275856 divulgue un catalyseur composé d'une phase active à base de Mo, V, W, Cu, laquelle phase active étant localisée en périphérie du support. Ce catalyseur trouve avantageusement une utilisation pour la conversion d'acroléine en acide acrylique.

Dans ce contexte, un des objectifs de la présente invention est de proposer un catalyseur et son utilisation dans un procédé d'hydrodésulfuration d'une coupe essence oléfinique contenant du soufre, présentant des performances en activité et en sélectivité, au moins aussi bonnes, voire meilleures, que les catalyseurs connus de l'état de la technique.

**Objets de l'invention**

La présente invention concerne un catalyseur comprenant une phase active contenant au moins un élément du groupe VIB, au moins un élément du groupe VIII et du phosphore, et un support poreux contenant au moins de l'alumine, ledit catalyseur étant caractérisé en ce qu'au moins 80 % en poids des éléments du groupe VIB, du groupe VIII et du phosphore soient répartis sur une croûte en périphérie dudit support, l'épaisseur de ladite croûte étant comprise entre 100 et 1200 $\mu$m, la teneur en élément du groupe VIB, mesurée sous forme oxyde, étant comprise entre 1 et 8% en poids par rapport au poids total du catalyseur, la teneur en élément du groupe VIII, mesurée sous forme oxyde, étant comprise entre 0,5 et 5% poids par rapport au poids total du catalyseur, et la teneur en phosphore, mesurée sous sa forme oxyde $P_2O_5$, étant comprise entre 0,2 et 3% poids par rapport au poids total du catalyseur, ledit support comprenant une surface spécifique comprise entre 100 m$^2$/g et 250 m$^2$/g.

La Demanderesse a découvert de manière surprenante qu'un catalyseur à base d'au moins un élément du groupe VIII, d'au moins un élément du groupe VIB et de phosphore répartis de manière spécifique dans un support comprenant une surface spécifique particulière présente une meilleure activité et une meilleure sélectivité en hydrodésulfuration par rapport aux catalyseurs divulgués dans l'art antérieur. Sans vouloir être lié par une quelconque théorie, il est envisagé que l'hydrotraitement des composés soufrés soit limité par la diffusion des réactifs au sein du support, ainsi la phase active présente majoritairement en périphérie du support permet une activité et une sélectivité améliorée en hydrogénation sélective. En effet, l'association du phosphore aux éléments du groupe VIII et du groupe VIB permet un contrôle des interactions entre la phase active et le support à base d'alumine présentant une surface spécifique importante favorisant la localisation en croûte de ladite phase active tout en maintenant une dispersion élevée maximisant ainsi le nombre de sites actifs et favorisant la conversion des composés soufrés. L'optimisation de la phase active sur un support spécifique permet de mettre en œuvre des catalyseurs moins chargés en phase active tout en présentant des performances en termes d'activité et/ou sélectivité au moins aussi bonnes, voire meilleures, que celles obtenues avec les catalyseurs de l'art antérieur.

Selon un ou plusieurs modes de réalisation, le rapport molaire entre l'élément du groupe VIII et l'élément du groupe VIB est compris entre 0,1 et 2,0 mol/mol.

Selon un ou plusieurs modes de réalisation, le rapport molaire entre le phosphore et le métal du groupe VIB est compris entre 0,1 et 2,0 mol/mol.

Selon un ou plusieurs modes de réalisation, ladite surface spécifique du support est comprise entre 120 et 220 $m^2$/g.

Selon un ou plusieurs modes de réalisation, l'épaisseur de ladite croûte est comprise entre 200 et 1000 $\mu$m.

Selon un ou plusieurs modes de réalisation, la teneur en élément du groupe VIB, mesurée sous forme oxyde, est comprise entre 2 et 7% en poids par rapport au poids total du catalyseur.

Selon un ou plusieurs modes de réalisation, la teneur en élément du groupe VIII, mesurée sous forme oxyde, est comprise entre 0,5 et 4% en poids par rapport au poids total du catalyseur.

Selon un ou plusieurs modes de réalisation, la teneur en phosphore, mesurée sous sa forme oxyde $P_2O_5$, est comprise entre 0,2 et 2% en poids par rapport au poids total du catalyseur.

Selon un ou plusieurs modes de réalisation, ledit support est à base d'alumine gamma et/ou chi, prises seules ou en mélange.

Selon un ou plusieurs modes de réalisation, ledit support se présente sous la forme de billes.

Selon un ou plusieurs modes de réalisation, le rapport molaire entre l'élément du groupe VIII et l'élément du groupe VIB est compris entre 0,35 et 0,45 mol/mol.

Selon un ou plusieurs modes de réalisation, le rapport molaire entre le phosphore et le métal du groupe VI est compris entre 0,2 et 0,4 mol/mol.

Selon un ou plusieurs modes de réalisation, ladite surface spécifique du support est comprise entre 130 $m^2$/g et 198 $m^2$/g.

Selon un ou plusieurs modes de réalisation, ledit support présente un volume poreux total mesuré par porosimétrie au mercure compris entre 0,3 et 0,9 $cm^3$/g.

Un autre objet selon l'invention concerne un procédé d'hydrodésulfuration d'une coupe essence oléfinique contenant du soufre dans lequel on met en contact ladite coupe essence, de l'hydrogène et ledit catalyseur selon l'invention, ledit procédé d'hydrodésulfuration étant effectué à une température comprise entre 200°C et 400°C, une pression totale comprise entre 1 MPa et 3 MPa, une vitesse volumique horaire, définie comme étant le débit volumique de charge rapporté au volume du catalyseur, compris entre 1 h$^{-1}$ et 10 h$^{-1}$, et un rapport volumique hydrogène/coupe essence compris entre 100 et 600 NL/L.

**Description détaillée de l'invention**

**Définitions**

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

On entend par surface spécifique, la surface spécifique BET (SBET en $m^2$/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309.

On entend par volume poreux total du catalyseur ou du support utilisé pour la préparation du catalyseur le volume mesuré par intrusion au porosimètre à mercure selon la norme ASTM D4284 à une pression maximale de 4000 bar (400 MPa), utilisant une tension de surface de 484 dyne/cm et un angle de contact de 140°, par exemple avec un appareil modèle Autopore III de la marque Micromeritics®.

L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur. Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Les teneurs en éléments du groupe VIII, du groupe VIB et du phosphore sont mesurées par fluorescence X.

**Définition du coefficient de répartition R**

Les profils de répartition des éléments au sein des grains de catalyseurs sont obtenus par microsonde de Castaing. Au moins 30 points d'analyses sont effectués le long du diamètre de la bille ou de l'extrudé à raison d'une dizaine de points sur la croûte d'un élément actif (ici les éléments du groupe VIB, du groupe VIII et le phosphore) et d'une dizaine de point au centre du grain. Il est ainsi obtenu le profil de répartition c(x) pour x € [-r ; +r] avec c la concentration massique locale de l'élément, r le rayon de la bille ou de l'extrudé et x la position du point d'analyse le long du diamètre du grain par rapport au centre de ce grain.

La répartition des éléments est caractérisée par un coefficient de répartition R adimensionnel pondérant la concentration locale par un poids croissant en fonction de la position sur le diamètre. Par définition :

$$R = \frac{r^2}{3} \int_{-r}^{r} c(x)dx \bigg/ \int_{-r}^{r} c(x)x^2 dx$$

Ainsi un élément dont la concentration est uniforme présente un coefficient de répartition R égal à 1, un élément déposé en dôme (concentration au cœur plus importante que la concentration aux bords du support) présente un coefficient supérieur à 1 et un élément réparti en croûte (concentration aux bords plus importante que la concentration au cœur du support) présente un coefficient inférieur à 1. L'analyse par microsonde de Castaing donne les valeurs des concentrations en un nombre fini de valeurs de x, R est ainsi évalué numériquement par des méthodes d'intégration bien connues de l'homme du métier. De préférence, R est déterminé par la méthode des trapèzes.

**Définition de l'épaisseur de croûte des éléments du groupe VIB, VIII et du phosphore**

Afin d'analyser la répartition de la phase active d'éléments du groupe VIB, d'éléments du groupe VIII et du phosphore au sein du support, on mesure une épaisseur de croûte par microsonde de Castaing (ou microanalyse par microsonde électronique). L'appareil utilisé est un CAMECA® XS100, équipé de quatre cristaux monochromateurs permettant l'analyse simultanée de quatre éléments. La technique d'analyse par microsonde de Castaing consiste en la détection de rayonnement X émis par un solide après excitation de ses éléments par un faisceau d'électrons de hautes énergies. Pour les besoins de cette caractérisation, les grains de catalyseur sont enrobés dans des plots de résine époxy. Ces plots sont polis jusqu'à atteindre la coupe au diamètre des billes ou extrudés puis métallisés par dépôt de carbone en évaporateur métallique. La sonde électronique est balayée le long du diamètre de cinq billes ou extrudés pour obtenir le profil de répartition moyen des éléments constitutifs des solides.

Lorsque l'élément analysé est reparti en croûte, sa concentration locale diminue généralement progressivement lorsqu'elle est mesurée en partant du bord du grain catalytique vers l'intérieur. Afin de mesurer une épaisseur de croûte qui est significative pour la majorité des particules d'éléments du groupe VIB, d'éléments du groupe VIII et de phosphore, l'épaisseur de croûte est définie comme la distance au bord du grain contenant 80 % en poids de l'ensemble des éléments du groupe VIB, du groupe VIII et du phosphore.

Elle est définie dans la publication de L. Sorbier et al. "Measurement of palladium crust thickness on catalyst by EPMA" Materials Science and Engineering 32 (2012). Pour mesurer une épaisseur de croûte qui est significative pour la majorité des particules, l'épaisseur de croûte peut de façon alternative être définie comme la distance au bord du grain contenant 80% en poids de l'ensemble des éléments du groupe VIB, de l'élément du groupe VIII et du phosphore. A partir du profil de répartition obtenu par la microsonde de Castaing (c(x)), on peut calculer la quantité cumulée Q(y) de chaque élément dans le grain en fonction de la distance y au bord du grain de rayon r.

Pour une bille :

$$Q(y) = \int_{-r}^{-y} c(x)4\pi.x^2 dx + \int_{y}^{r} c(x)4\pi.x^2 dx$$

Pour un extrudé :

$$Q(y) = \int_{-r}^{-r+y} c(x)2\pi.\,xdx + \int_{r-y}^{r} c(x)2\pi.\,xdx$$

avec

r : rayon du grain ;
y : distance au bord du grain ;
x : variable d'intégration (position sur le profil).

On suppose que le profil de concentration suit le diamètre pris de x = - r à x = + r (x = 0 étant le centre).
Q(r) correspond ainsi à la quantité totale de l'élément dans le grain. On résout ensuite numériquement l'équation suivante en y :

$$\frac{Q(y)}{Q(r)} = 0,8$$

c étant une fonction strictement positive, Q est donc une fonction strictement croissante et cette équation possède une seule solution qui est l'épaisseur de croûte.

**Catalyseur**

Le catalyseur selon l'invention comprend, de préférence est constitué de, une phase active contenant au moins un élément du groupe VIB, au moins un élément du groupe VIII et du phosphore, et un support poreux contenant au moins de l'alumine, ledit catalyseur étant caractérisé en ce qu'au moins 80 % en poids des éléments du groupe VIB, du groupe VIII et du phosphore soient répartis sur une croûte en périphérie dudit support, l'épaisseur de ladite croûte étant comprise entre 100 et 1200 $\mu$m, la teneur en élément du groupe VIB, mesurée sous forme oxyde, étant comprise entre 1 et 8% en poids par rapport au poids total du catalyseur, la teneur en élément du groupe VIII, mesurée sous forme oxyde, étant comprise entre 0,5 et 5% poids par rapport au poids total du catalyseur, et la teneur en phosphore, mesurée sous sa forme oxyde $P_2O_5$, étant comprise entre 0,2 et 3% poids par rapport au poids total du catalyseur, ledit support comprenant une surface spécifique comprise entre 100 m$^2$/g et 250 m$^2$/g.
Avantageusement, lesdits éléments du groupe VIB, du groupe VIII et le phosphore sont répartis en périphérie du support poreux avec un coefficient de répartition R, mesuré par microsonde de Castaing, inférieur à 0,8, de préférence inférieur à 0,7.
Avantageusement, au moins 80% en poids des éléments du groupe VIB, du groupe VIII et du phosphore est réparti dans une croûte à la périphérie dudit support, l'épaisseur de ladite croûte étant comprise entre 100 et 1200 $\mu$m, de préférence entre 200 et 1000 $\mu$m.
La teneur en élément du groupe VIB de la phase active, mesurée sous forme oxyde, est comprise entre 1 et 8% poids par rapport au poids total du catalyseur, de préférence entre 2 et 7% poids, et encore plus préférentiellement entre 3 et 6% poids. L'élément du groupe VIB est de préférence choisi parmi le molybdène et le tungstène. De manière plus préférée, l'élément du groupe VIB est le molybdène. Lorsque l'élément est le molybdène ou le tungstène, la teneur en métal s'exprime en $MoO_3$ ou $WO_3$ respectivement.
La teneur en élément du groupe VIII de la phase active, mesurée sous forme oxyde, est comprise entre 0,5 et 5% poids par rapport au poids total du catalyseur, de préférence entre 0,5 et 4% poids, et encore plus préférentiellement entre 0,5 et 3% poids. L'élément du groupe VIII est choisi de préférence parmi le nickel, le cobalt, et le fer. De manière plus préférée, l'élément du groupe VIII est le cobalt. Lorsque l'élément est le cobalt ou le nickel, la teneur en élément s'exprime en CoO ou NiO respectivement.
La teneur en phosphore, mesurée sa forme oxyde $P_2O_5$, est comprise entre 0,2 et 3% poids par rapport au poids total du catalyseur, de préférence entre 0,2 et 2% poids, et encore plus préférentiellement entre 0,3 et 1,5% poids.
Les teneurs en élément du groupe VIB, en élément du groupe VIII, en phosphore dans le catalyseur sont exprimées en oxydes après correction de la perte au feu de l'échantillon de catalyseur à 550°C pendant deux heures en four à moufle. La perte au feu est due à la perte d'humidité. Elle est déterminée selon l'ASTM D7348.
De préférence, le ratio molaire entre ledit élément du groupe VIII de la phase active et ledit élément du groupe VIB de la phase active est compris entre 0,1 et 2,0 mol/mol, de préférence entre 0,3 et 1,0 mol/mol, plus préférentiellement entre 0,3 et 0,5 mol/mol, et de manière encore plus préférée entre 0,35 et 0,45 mol/mol.
De préférence, le ratio molaire entre le phosphore et ledit élément du groupe VIB de la phase active est compris entre 0,1 et 2,0 mol/mol, de préférence entre 0,2 et 1,0 mol/mol, plus préférentiellement entre 0,2 et 0,7 mol/mol, encore plus préférentiellement entre 0,2 et 0,5 mol/mol, et de manière encore plus préférée entre 0,2 et 0,4 mol/mol.

La surface spécifique du catalyseur est comprise entre 100 $m^2$/g et 250 $m^2$/g, de préférence entre 120 $m^2$/g et 220 $m^2$/g, plus préférentiellement entre 120 $m^2$/g et 200 $m^2$/g, et encore plus préférentiellement entre 130 $m^2$/g et 198 $m^2$/g.

Le catalyseur présente avantageusement un volume poreux total mesuré par porosimétrie au mercure compris entre 0,3 $cm^3$/g et 0,9 $cm^3$/g, de préférence entre 0,35 $cm^3$/g et 0,8 $cm^3$/g, et de manière très préférée entre 0,4 $cm^3$/g et 0,7 $cm^3$/g.

## Support

Le support du catalyseur selon l'invention peut se présenter sous la forme de billes, d'extrudés de tout géométrie, de plaquettes, de pellets, de cylindre compressé, de solide concassés ou tout autre mise en forme. De manière préférée, le support se présente sous la forme de billes de 0,5 à 6 mm de diamètre ou sous la forme d'extrudés cylindrique, trilobe ou quadrilobe de 0,8 à 3 mm de diamètre circonscrit. Plus préférentiellement, le support se présente sous la forme de billes.

Le support dudit catalyseur selon l'invention comprend de l'alumine, de préférence choisi parmi les alumines suivantes : alumines gamma, delta, thêta, êta, rho, chi, kappa, prises seules ou en mélange. De manière préférée le support est à base d'alumine gamma et/ou chi, prises seules ou en mélange.

La surface spécifique du support est comprise entre 100 $m^2$/g et 250 $m^2$/g, de préférence entre 120 $m^2$/g et 220 $m^2$/g, plus préférentiellement entre 120 $m^2$/g et 200 $m^2$/g, et encore plus préférentiellement entre 130 $m^2$/g et 198 $m^2$/g.

Le support présente avantageusement un volume poreux total mesuré par porosimétrie au mercure compris entre 0,3 $cm^3$/g et 0,9 $cm^3$/g, de préférence entre 0,35 $cm^3$/g et 0,8 $cm^3$/g, et de manière très préférée entre 0,4 $cm^3$/g et 0,7 $cm^3$/g.

## Préparation du catalyseur

Le catalyseur selon l'invention peut être préparé au moyen de toute technique connue de l'homme du métier, et notamment par imprégnation des éléments des groupes VIII et VIB et du phosphore sur le support poreux sélectionné. L'imprégnation peut par exemple être réalisée selon le mode connu de l'homme du métier sous la terminologie d'imprégnation à sec, dans lequel on introduit juste la quantité de précurseurs d'éléments désirés sous forme de sels solubles dans le solvant choisi, par exemple de l'eau déminéralisée, de façon à remplir aussi exactement que possible la porosité du support. De préférence, la solution aqueuse d'imprégnation lorsqu'elle contient du cobalt, du molybdène et du phosphore est préparée dans des conditions de pH favorisant la formation d'hétéropolyanions en solution. Par exemple le pH d'une telle solution aqueuse est compris entre 1 et 5. De préférence la préparation du catalyseur est réalisée sans ajout d'agent organique en mélange avec les précurseurs des éléments des groupe VIII, groupe VI et du phosphore.

A titre d'exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMO_{12}O_{40}$), et leurs sels, et éventuellement l'acide silicomolybdique ($H_4SiMo_{12}O_{40}$) et ses sels. Les sources de molybdène peuvent être également tout hétéropolycomposé de type Keggin, Keggin lacunaire, Keggin substitué, Dawson, Anderson, Strandberg, par exemple. On utilise de préférence le trioxyde de molybdène et les hétéropolycomposés de type Keggin, Keggin lacunaire, Keggin substitué et Strandberg.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels, en particulier les sels d'ammonium tels que le tungstate d'ammonium, le métatungstate d'ammonium, l'acide phosphotungstique et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs de cobalt qui peuvent être utilisés sont avantageusement choisis parmi les oxydes, les hydroxydes, les hydroxycarbonates, les carbonates et les nitrates, par exemple. L'hydroxyde de cobalt et le carbonate de cobalt sont utilisés de manière préférée.

Les précurseurs de nickel qui peuvent être utilisés sont avantageusement choisis parmi les oxydes, les hydroxydes, les hydroxycarbonates, les carbonates et les nitrates, par exemple. L'hydroxyde de nickel et l'hydroxycarbonate de nickel sont utilisés de manière préférée.

Le phosphore peut avantageusement être introduit seul ou en mélange avec l'un au moins des éléments du groupe VIB et VIII. Le phosphore est de préférence introduit en mélange avec les précurseurs des métaux du groupe VIB et du groupe VIII par une imprégnation à sec dudit support poreux à l'aide d'une solution contenant les précurseurs des éléments et le précurseur du phosphore. La source de phosphore préférée est l'acide orthophosphorique $H_3PO_4$, mais ses sels et esters comme les phosphates d'ammonium ou leurs mélanges conviennent également. Le phosphore peut également être introduit en même temps que le(s) élément(s) du groupe VIB sous la forme, par exemple, d'hétéropolyanions de Keggin, Keggin lacunaire, Keggin substitué ou de type Strandberg.

Le support ainsi rempli par la solution peut être laissé à maturer à une température inférieure à 50°C, de préférence à température ambiante, pendant un temps n'excédant pas 12 heures, de préférence n'excédant pas 6 heures.

A la suite de l'étape de maturation, le précurseur de catalyseur obtenu peut subir un traitement thermique. Ce traitement a généralement pour but de transformer les précurseurs moléculaires des éléments en phase oxyde. Il s'agit dans ce cas d'un traitement oxydant mais un simple séchage du catalyseur peut également être effectué.

Dans le cas d'un séchage, le précurseur de catalyseur est séché à une température comprise entre 50°C et 200°C, de préférence entre 70°C et 180°C, pendant une durée comprise typiquement entre 0,5 heure et 12 heures, et de façon encore plus préférée pendant une durée comprise entre 0,5 heure et 5 heures.

Dans le cas d'un traitement oxydant, également appelé calcination, celui-ci est généralement mis en œuvre sous air ou sous oxygène dilué, et la température de traitement est généralement comprise entre 200°C et 550°C, de préférence entre 300°C et 500°C, et avantageusement pendant une durée typiquement comprise entre 0,5 heure à 24 heures, de façon préférée pendant une durée de 0,5 heure à 12 heures, et de façon encore plus préférée pendant une durée de 0,5 heure à 10 heures.

Avant son utilisation en tant que catalyseur d'hydrotraitement, il est avantageux de soumettre le catalyseur optionnellement séché ou calciné à une étape d'activation par sulfuration. Cette phase d'activation s'effectue par les méthodes bien connues de l'homme de l'art, et avantageusement sous une atmosphère sulfo-réductrice en présence d'hydrogène et d'hydrogène sulfuré. L'hydrogène sulfuré peut être utilisé directement ou généré par un agent sulfure (tel que le diméthyldisulfure).

**Procédé d'hydrodésulfuration d'essence**

Le procédé d'hydrotraitement consiste à mettre en contact la coupe essence oléfinique contenant du soufre avec un catalyseur tel que décrit ci-avant et de l'hydrogène dans les conditions suivantes :

- une température comprise entre 200°C et 400°C, de préférence comprise entre 230°C et 330°C ;
- à une pression totale comprise entre 1 MPa et 3 MPa, de préférence comprise entre 1,5 MPa et 2,5 MPa ;
- une vitesse volumique horaire (V.V.H.), définie comme étant le débit volumique de charge rapporté au volume de catalyseur, comprise entre 1 $h^{-1}$ et 10 $h^{-1}$, de préférence comprise entre 2 $h^{-1}$ et 6 $h^{-1}$ ;
- un rapport volumique hydrogène/charge essence compris entre 100 et 600 Nl/l, de préférence compris entre 200 et 400 Nl/l.

Ainsi, le procédé selon l'invention permet de traiter tout type de coupe essence oléfinique contenant du soufre, telle que par exemple une coupe issue d'une unité de cokéfaction (coking selon la terminologie anglo-saxonne), de viscoréduction (visbreaking selon la terminologie anglo-saxonne), de vapocraquage (steam cracking selon la terminologie anglo-saxonne) ou de craquage catalytique (FCC, Fluid Catalytic Cracking selon la terminologie anglo-saxonne). Cette essence peut éventuellement être composée d'une fraction significative d'essence provenant d'autres procédés de production telle que la distillation atmosphérique (essence issue d'une distillation directe (ou essence straight run selon la terminologie anglo-saxonne) ou de procédés de conversion (essence de cokéfaction ou de vapocraquage). Ladite charge est de préférence constituée d'une coupe essence issue d'une unité de craquage catalytique.

La charge est avantageusement une coupe essence contenant des composés soufrés et des oléfines et a une température d'ébullition comprise entre 30°C et inférieure à 250°C, de préférence entre 35°C et 240°C, et de manière préférée entre 40°C et 220°C.

La teneur en soufre des coupes essences produites par craquage catalytique (FCC) dépend de la teneur en soufre de la charge traitée par le FCC, de la présence ou non d'un prétraitement de la charge du FCC, ainsi que du point final de la coupe. Généralement, les teneurs en soufre de l'intégralité d'une coupe essence, notamment celles provenant du FCC, sont supérieures à 100 ppm en poids et la plupart du temps supérieures à 500 ppm en poids. Pour des essences ayant des points finaux supérieurs à 200°C, les teneurs en soufre sont souvent supérieures à 1000 ppm en poids, elles peuvent même dans certains cas atteindre des valeurs de l'ordre de 4000 à 5000 ppm en poids.

Par ailleurs les essences issues d'unités de craquage catalytique (FCC) contiennent, en moyenne, entre 0,5% et 5% poids de dioléfines, entre 20% et 50% poids d'oléfines, entre 10 ppm et 0,5% poids de soufre dont généralement moins de 300 ppm de mercaptans. Les mercaptans se concentrent généralement dans les fractions légères de l'essence et plus précisément dans la fraction dont la température d'ébullition est inférieure à 120°C.

Il est à noter que les composés soufrés présents dans l'essence peuvent également comprendre des composés soufrés hétérocycliques, tels que par exemple les thiophènes, les alkylthiophènes ou des benzothiophènes. Ces composés hétérocycliques, contrairement aux mercaptans, ne peuvent pas être éliminés par les procédés extractifs. Ces composés soufrés sont par conséquent éliminés par un hydrotraitement, qui conduit à leur transformation en hydrocarbures et en $H_2S$.

De préférence, l'essence traitée par le procédé selon l'invention est une essence lourde (ou HCN pour Heavy Cracked Naphtha selon la terminologie anglo-saxonne) issue d'une étape de distillation visant à séparer une coupe large de l'essence issue d'un procédé de craquage (ou FRCN pour Full Range Cracked Naphtha selon la terminologie anglo-saxonne) en une essence légère (LCN pour Light Cracked Naphtha selon la terminologie anglo-saxonne) et une essence lourde HCN. Le point de coupe de l'essence légère et de l'essence lourde est déterminé afin de limiter la teneur en soufre de l'essence légère et de permettre son utilisation dans le pool essence de préférence sans post traitement supplémentaire. De façon avantageuse, la coupe large FRCN est soumise à une étape d'hydrogénation sélective décrite ci-après avant l'étape de distillation.

**Exemples**

L'invention est décrite ensuite par les exemples suivant sans en limiter la portée.

Exemple 1 : Préparation du catalyseur A (Conforme)

On fournit un support A' majoritairement composé d'alumine gamma sous forme de billes de granulométrie comprise entre 2 et 4 mm, et présentant une surface spécifique de 194 m$^2$/g et un volume poreux de 0,60 mL/g.

On ajoute alors du cobalt, du molybdène et du phosphore. La solution d'imprégnation est préparée par dissolution à 100°C de l'oxyde de molybdène (1,14 g, $\geq$99,5%, Sigma-Aldrich®), d'hydroxyde de cobalt (0,3 g, 96%, Alfa Aesar®), d'acide phosphorique à 85 % poids (0,24 g, 99,99%, Sigma-Aldrich®) dans 16 mL d'eau déminéralisée. Après imprégnation à sec de 20 grammes de support A', l'alumine imprégnée est laissée à maturer en atmosphère saturée en eau pendant 4 heures à température ambiante, puis séchée à 120°C pendant 4 heures. Le catalyseur ainsi obtenu est noté A.

La composition finale en métaux du catalyseur A, exprimée sous forme d'oxydes et rapportée au poids du catalyseur sec est alors la suivante : MoO$_3$ = 5,3 +/- 0,2 % poids, CoO = 1,1+/- 0,1 % poids et P$_2$O$_5$ = 0,7 +/- 0,1 % poids. Les rapports molaires Co/Mo et P/Mo sont respectivement de 0,39 et 0,27. Le volume poreux du catalyseur A est de 0,55 mL/g et la surface spécifique de 189 m$^2$/g.

Les répartitions des éléments et épaisseurs de croûte en phase active du catalyseur A mesurées par microsonde de Castaing sont données au tableau 1.

Exemple 2 : Préparation du catalyseur B (Conforme)

On fournit un support B' majoritairement composé d'alumine gamma sous forme de billes de granulométrie comprise entre 2 et 4 mm, et présentant une surface spécifique de 145 m$^2$/g et un volume poreux de 0,63 mL/g.

On ajoute alors du cobalt, du molybdène et du phosphore. La solution d'imprégnation est préparée par dissolution à 100°C de l'oxyde de molybdène (1,12 g, $\geq$99,5%, Sigma-Aldrich®), d'hydroxyde de cobalt (0,3 g, 96%, Alfa Aesar®), d'acide phosphorique à 85 % poids (0,24 g, 99,99%, Sigma-Aldrich®) dans 14,7 mL d'eau déminéralisée. Après imprégnation à sec de 20 grammes de support B', l'alumine imprégnée est laissée à maturer en atmosphère saturée en eau pendant 4 heures à température ambiante, puis séchée à 120°C pendant 4 heures. Le catalyseur ainsi obtenu est noté B.

La composition finale en métaux du catalyseur B, exprimée sous forme d'oxydes et rapportée au poids du catalyseur sec est alors la suivante : MoO$_3$ = 5,2 +/- 0,2 % poids, CoO = 1,1+/- 0,1 % poids et P$_2$O$_5$ = 0,7 +/- 0,1 % poids. Les rapports molaires Co/Mo et P/Mo sont respectivement de 0,38 et 0,26. Le volume poreux du catalyseur B est de 0,57 mL/g et la surface spécifique de 141 m$^2$/g.

Les répartitions des éléments et épaisseurs de croûte en phase active du catalyseur B mesurées par microsonde de Castaing sont données au tableau 1.

Exemple 3 : Préparation du catalyseur C (Non-conforme ; basse S$_{BET}$)

On fournit un support C' majoritairement composé d'alumine thêta et delta sous forme de billes de granulométrie comprise entre 2 et 4 mm, et présentant une surface spécifique de 81 m$^2$/g et un volume poreux de 1,03 mL/g.

On ajoute alors du cobalt, du molybdène et du phosphore. La solution d'imprégnation est préparée par dissolution à 100°C de l'oxyde de molybdène (0,63 g, $\geq$99,5%, Sigma-Aldrich®), d'hydroxyde de cobalt (0,16 g, 96%, Alfa Aesar®), d'acide phosphorique à 85 % poids (0,14 g, 99,99%, Sigma-Aldrich®) dans 14,8 mL d'eau déminéralisée. Après imprégnation à sec de 20 grammes de support C', l'alumine imprégnée est laissée à maturer en atmosphère saturée en eau pendant 4 heures à température ambiante, puis séchée à 120°C pendant 4 heures. Le catalyseur ainsi obtenu est noté C.

La composition finale en métaux du catalyseur C, exprimée sous forme d'oxydes et rapportée au poids du catalyseur sec est alors la suivante : $MoO_3$ = 3,0 +/- 0,2 % poids, CoO = 0,6 +/-0,1 % poids et $P_2O_5$ = 0,4 +/- 0,1 % poids. Les rapports molaires Co/Mo et P/Mo sont respectivement de 0,38 et 0,27. Le volume poreux du catalyseur C est de 1,02 mL/g et la surface spécifique de 80 m²/g.

Les répartitions des éléments et épaisseurs de croûte en phase active du catalyseur C mesurées par microsonde de Castaing sont données au tableau 1.

Exemple 4 : Préparation du catalyseur D (Non-conforme, pas de phosphore)

On fournit un support D'identique au support A' de l'exemple 1.

On ajoute alors du cobalt et du molybdène. La solution d'imprégnation est préparée par dissolution à 90°C d'heptamolybdate d'ammonium tétrahydraté (1,39 g, 99,98%, Sigma-Aldrich®) et de nitrate de cobalt hexahydraté (0,89 g, 98%, Sigma-Aldrich), dans 16 mL d'eau. Après imprégnation à sec de 20 grammes de support D', l'alumine imprégnée est laissée à maturer en atmosphère saturée en eau pendant 4h à température ambiante, puis séchée à 120°C pendant 4heures. Le solide est ensuite calciné sous air à 450°C pendant 2 heures. Le catalyseur ainsi obtenu est noté D.

La composition finale en métaux du catalyseur D, exprimée sous forme d'oxydes et rapportée au poids du catalyseur sec est alors la suivante : $MoO_3$ = 5,3 +/- 0,2 % poids et CoO = 1,1+/- 0,1 % poids. Le rapport molaire Co/Mo est de 0,39. Le volume poreux du catalyseur D est de 0,58 mL/g et la surface spécifique de 182 m²/g.

Les répartitions des éléments et épaisseurs de croûte en phase active du catalyseur D mesurées par microsonde de Castaing sont données au tableau 1.

Exemple 5 : Préparation du catalyseur E (Non-conforme, teneur Mo élevée)

On fournit un support E' identique au support B' de l'exemple 2.

On ajoute alors du cobalt, du molybdène et du phosphore. La solution d'imprégnation est préparée par dissolution à 90°C de l'oxyde de molybdène (2,45 g, ≥99,5%, Sigma-Aldrich®), d'hydroxyde de cobalt (0,60 g, 96%, Alfa Aesar®), d'acide phosphorique à 85 % poids (0,53 g, 99,99%, Sigma-Aldrich®) dans 14,7 mL d'eau déminéralisée. Après imprégnation à sec de 20 grammes de support E', l'alumine imprégnée est laissée à maturer en atmosphère saturée en eau pendant 4 heures à température ambiante, puis séchée à 120°C pendant 4 heures. Le catalyseur ainsi obtenu est noté E.

La composition finale en métaux du catalyseur E, exprimée sous forme d'oxydes et rapportée au poids du catalyseur sec est alors la suivante : $MoO_3$ = 10,5 +/- 0,2 % poids, CoO = 2,0+/- 0,1 % poids et $P_2O_5$ = 1,4 +/- 0,1 % poids. Les rapports molaires Co/Mo et P/Mo sont respectivement de 0,37 et 0,27. Le volume poreux du catalyseur B est de 0,52 mL/g et la surface spécifique de 136 m²/g.

Les répartitions des éléments et épaisseurs de croûte en phase active du catalyseur E mesurées par microsonde de Castaing sont données au tableau 1.

Exemple 6 : Préparation du catalyseur F (Non-conforme, $S_{BET}$ élevée + pas de phosphore)

On fournit un support F' majoritairement composé d'alumine gamma sous forme de billes de granulométrie comprise entre 2 et 4 mm, et présentant une surface spécifique de 264 m²/g et un volume poreux de 0,46 mL/g.

On prépare un catalyseur selon le protocole présenté dans la partie expérimentale de l'article Journal of Natural Gas Chemistry 21(2012)194-199 sur 28 g du support F' afin d'adapter les quantités de solution d'imprégnation au volume poreux du support F' utilisé, le temps d'imprégnation étant fixé à 15 minutes.

On obtient le catalyseur F. La composition finale en élément du catalyseur F, exprimée sous forme d'oxydes et rapportée au poids du catalyseur sec est alors la suivante : $MoO_3$ = 6,8 +/-0,2 % poids et CoO = 1,8+/- 0,1 % poids. Le rapports molaires Co/Mo est de 0,57. La surface spécifique du catalyseur F est de 242 m²/g et le volume poreux de 0,44 mL/g.

Les répartitions des éléments et épaisseurs de croûte en phase active du catalyseur F mesurées par microsonde de Castaing sont données au tableau 1.

Exemple 7 : Evaluation des performances des catalyseurs A à F mis en œuvre en hydrodésulfuration

Dans cet exemple, les performances des catalyseurs A à F sont évaluées en hydrodésulfuration d'une essence de craquage catalytique.

Une charge modèle représentative d'une essence de craquage catalytique (FCC) contenant 10% poids de 2,3-diméthylbut-2-ène et 0,33% poids de 3-méthylthiophène (soit 1000 ppm pds de soufre dans la charge) est utilisée pour l'évaluation des performances catalytiques des différents catalyseurs. Le solvant utilisé est l'heptane.

La réaction d'hydrodésulfuration (HDS) est opérée dans un réacteur à lit fixe traversé sous une pression totale de 1,5 MPa, à 210°C, à VVH = 6 h$^{-1}$ (VVH = débit volumique de charge/volume de catalyseur), et un rapport volumique H$_2$/charge de 300 Nl/l, en présence de 4 mL de catalyseur. Au préalable à la réaction d'HDS, le catalyseur est sulfuré in-situ à 350°C pendant 2 heures sous un flux d'hydrogène contenant 15% mol d'H$_2$S à pression atmosphérique.

Chacun des catalyseurs est placé successivement dans ledit réacteur. Des échantillons sont prélevés à différents intervalles de temps et sont analysés par chromatographie en phase gazeuse de façon à observer la disparition des réactifs et la formation des produits.

Les performances catalytiques des catalyseurs sont évaluées en termes d'activité catalytique et de la sélectivité. L'activité en hydrodésulfuration (HDS) est exprimée à partir de la constante de vitesse pour la réaction d'HDS du 3-méthylthiophène (kHDS), normalisée par le volume de catalyseur introduit et en supposant une cinétique d'ordre 1 par rapport au composé soufré. L'activité en hydrogénation des oléfines (HydO) est exprimée à partir de la constante de vitesse de la réaction d'hydrogénation du 2,3-diméthylbut-2-ène, normalisée par le volume de catalyseur introduit et en supposant une cinétique d'ordre 1 par rapport à l'oléfine.

La sélectivité du catalyseur est exprimée par le rapport normalisé des constantes de vitesse kHDS/kHydO. Le rapport kHDS/kHydO sera d'autant plus élevé que le catalyseur sera plus sélectif. Les valeurs obtenues sont normalisées en prenant le catalyseur A comme référence (activité HDS relative et sélectivité relative égale à 100). Les performances sont donc l'activité HDS relative et la sélectivité relative.

Tableau 1

| Catalyseur | A Conforme | B Conforme | C Non-conforme | D Non-conforme | E Non-conforme | F Non-conforme |
|---|---|---|---|---|---|---|
| Sbet support | 194 | 145 | 81 | 194 | 145 | 264 |
| teneur CoO (% pds) | 1,1 | 1,1 | 0,6 | 1,1 | 2,0 | 1,8 |
| teneur MoO$_3$ (% pds) | 5,3 | 5,2 | 3,0 | 5,3 | 10,5 | 6,8 |
| teneur P$_2$O$_5$ (% pds) | 0,7 | 0,7 | 0,4 | - | 1,4 | - |
| rapport molaire Co/Mo | 0,39 | 0,38 | 0,38 | 0,39 | 0,37 | 0,57 |
| rapport molaire P/Mo | 0,27 | 0,26 | 0,27 | - | 0,27 | - |
| R$_{Co}$ | 0,53 | 0,65 | 1,09 | 0,87 | 0,88 | 0,62 |
| R$_{Mo}$ | 0,53 | 0,66 | 1,07 | 0,97 | 0,87 | 0,61 |
| Rp | 0,42 | 0,45 | 0,53 | - | 0,76 | - |
| Epaisseur de croûte ($\mu$m) | 720 | 950 | non déterminable | non déterminable | non déterminable. | 860 |
| Activité relative | 100 | 110 | 53 | 85 | 101 | 90 |
| Sélectivité relative | 100 | 95 | 88 | 89 | 93 | 102 |
| Répartition des éléments, mesures d'épaisseur de croûte et performances en hydrodésulfuration des catalyseurs A à F | | | | | | |

On constate que les catalyseurs A et B selon l'invention présentent de meilleures performances en activité et sélectivité tout en permettant une meilleure efficacité de la phase active et ainsi mettant en œuvre de faibles quantités d'éléments des groupes VIB et VIII.

**Revendications**

1. Catalyseur comprenant une phase active contenant au moins un élément du groupe VIB, au moins un élément du groupe VIII et du phosphore, et un support poreux contenant au moins de l'alumine, ledit catalyseur étant **caractérisé en ce qu'**au moins 80 % en poids des éléments du groupe VIB, du groupe VIII et du phosphore soient répartis sur une croûte en périphérie dudit support, l'épaisseur de ladite croûte étant comprise entre 100 et 1200 $\mu$m, la teneur en élément du groupe VIB, mesurée sous forme oxyde, étant comprise entre 1 et 8% en poids par rapport au poids total du catalyseur, la teneur en élément du groupe VIII, mesurée sous forme oxyde, étant comprise entre 0,5 et 5% poids par rapport au poids total du catalyseur, et la teneur en phosphore, mesurée sous sa forme oxyde $P_2O_5$, étant comprise entre 0,2 et 3% poids par rapport au poids total du catalyseur, ledit support comprenant une surface spécifique comprise entre 100 m$^2$/g et 250 m$^2$/g.

2. Catalyseur selon la revendication 1, **caractérisé en ce que** le rapport molaire entre l'élément du groupe VIII et l'élément du groupe VIB est compris entre 0,1 et 2,0 mol/mol.

3. Catalyseur selon l'une des revendications 1 ou 2, **caractérisé en ce que** le rapport molaire entre le phosphore et le métal du groupe VIB est compris entre 0,1 et 2,0 mol/mol.

4. Catalyseur selon l'une quelconque des revendications 1 à 3, **caractérisé en ce que** ladite surface spécifique du support est comprise entre 120 m$^2$/g et 220 m$^2$/g.

5. Catalyseur selon l'une quelconque des revendications 1 à 4, **caractérisé en ce que** l'épaisseur de ladite croûte est comprise entre 200 et 1000 $\mu$m.

6. Catalyseur selon l'une quelconque des revendications 1 à 5, **caractérisé en ce que** la teneur en élément du groupe VIB, mesurée sous forme oxyde, est comprise entre 2 et 7% en poids par rapport au poids total du catalyseur.

7. Catalyseur selon l'une quelconque des revendications 1 à 6, **caractérisé en ce que** la teneur en élément du groupe VIII, mesurée sous forme oxyde, est comprise entre 0,5 et 4% en poids par rapport au poids total du catalyseur.

8. Catalyseur selon l'une quelconque des revendications 1 à 7, **caractérisé en ce que** la teneur en phosphore, mesurée sous sa forme oxyde $P_2O_5$, est comprise entre 0,2 et 2% en poids par rapport au poids total du catalyseur.

9. Catalyseur selon l'une quelconque des revendications 1 à 8, **caractérisé en ce que** ledit support est à base d'alumine gamma et/ou chi, prises seules ou en mélange.

10. Catalyseur selon l'une quelconque des revendications 1 à 9, **caractérisé en ce que** ledit support se présente sous la forme de billes.

11. Catalyseur selon l'une quelconque des revendications 1 à 10, **caractérisé en ce que** le rapport molaire entre l'élément du groupe VIII et l'élément du groupe VIB est compris entre 0,35 et 0,45 mol/mol.

12. Catalyseur selon l'une quelconque des revendications 1 à 11, **caractérisé en ce que** le rapport molaire entre le phosphore et le métal du groupe VI est compris entre 0,2 et 0,4 mol/mol.

13. Catalyseur selon l'une quelconque des revendications 1 à 12, **caractérisé en ce que** ladite surface spécifique du support est comprise entre 130 m$^2$/g et 198 m$^2$/g.

14. Catalyseur selon l'une quelconque des revendications 1 à 13, **caractérisé en ce que** ledit support présente un volume poreux total mesuré par porosimétrie au mercure compris entre 0,3 cm$^3$/g et 0,9 cm$^3$/g.

15. Procédé d'hydrodésulfuration d'une coupe essence oléfinique contenant du soufre dans lequel on met en contact ladite coupe essence, de l'hydrogène et ledit catalyseur selon l'une quelconque des revendications 1 à 14, ledit procédé d'hydrodésulfuration étant effectué à une température comprise entre 200°C et 400°C, une pression totale comprise entre 1 MPa et 3 MPa, une vitesse volumique horaire, définie comme étant le débit volumique de charge rapporté au volume du catalyseur, compris entre 1 h$^{-1}$ et 10 h$^{-1}$, et un rapport volumique hydrogène/coupe essence compris entre 100 et 600 NL/L.

Europäisches
Patentamt

European
Patent Office

Office européen
des brevets

# RAPPORT DE RECHERCHE EUROPEENNE

Numéro de la demande

**EP 22 18 4511**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/001272 A1 (DAUDIN ANTOINE [FR]) 7 janvier 2016 (2016-01-07) * exemple 4, exemples, 16, 18 * ----- | 1-15 | INV. B01J21/04 B01J23/882 B01J35/00 |
| X | WO 2020/126680 A1 (IFP ENERGIES NOW [FR]) 25 juin 2020 (2020-06-25) * 37, 42-44, 52-55, 57, 58, exemples * ----- | 1-15 | B01J35/08 B01J35/10 B01J37/00 B01J37/02 B01J37/08 B01J37/16 B01J37/20 B01J37/28 C10G2/00 |
| | | | **DOMAINES TECHNIQUES RECHERCHES (IPC)** B01J C10G |

Le présent rapport a été établi pour toutes les revendications

| Lieu de la recherche | Date d'achèvement de la recherche | Examinateur |
|---|---|---|
| Munich | 5 décembre 2022 | de Cauwer, Robby |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

EP 4 122 596 A1

## ANNEXE AU RAPPORT DE RECHERCHE EUROPEENNE
## RELATIF A LA DEMANDE DE BREVET EUROPEEN NO.

EP 22 18 4511

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-12-2022

| Document brevet cité au rapport de recherche | Date de publication | Membre(s) de la famille de brevet(s) | Date de publication |
|---|---|---|---|
| US 2016001272 A1 | 07-01-2016 | BR 102015015930 A2 | 05-01-2016 |
| | | CN 105312069 A | 10-02-2016 |
| | | DK 2962753 T3 | 17-06-2019 |
| | | EP 2962753 A1 | 06-01-2016 |
| | | FR 3023184 A1 | 08-01-2016 |
| | | JP 6642986 B2 | 12-02-2020 |
| | | JP 2016016404 A | 01-02-2016 |
| | | US 2016001272 A1 | 07-01-2016 |
| WO 2020126680 A1 | 25-06-2020 | CA 3119862 A1 | 25-06-2020 |
| | | CN 113301995 A | 24-08-2021 |
| | | EP 3897980 A1 | 27-10-2021 |
| | | FR 3089826 A1 | 19-06-2020 |
| | | SG 11202106495P A | 29-07-2021 |
| | | US 2022062874 A1 | 03-03-2022 |
| | | WO 2020126680 A1 | 25-06-2020 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- CN 104275191
- US 20180193823 A
- US 2011275856 A

**Littérature non-brevet citée dans la description**

- **B. LIU et al.** *Fuel,* 2012, vol. 25, 457-463
- *JOURNAL OF NATURAL GAS CHEMISTRY,* Mars 2012, vol. 21 (2), 194-199
- CRC Handbook of Chemistry and Physics. 2000
- *The Journal of American Society,* 1938, vol. 60, 309
- **JEAN CHARPIN ; BERNARD RASNEUR.** *Techniques de l'ingénieur, traité analyse et caractérisation,* 1050-1055
- **L. SORBIER et al.** Measurement of palladium crust thickness on catalyst by EPMA. *Materials Science and Engineering,* 2012, vol. 32
- *Journal of Natural Gas Chemistry,* 2012, vol. 21, 194-199